# EUROPEAN PATENT APPLICATION

(11) **EP 4 464 675 A1**
(43) Date of publication of application: **20.11.2024**
(21) Application number: 22920517.4
(22) Date of filing: 08.12.2022
(51) Int. Cl.: C03C 17/25, B60J 1/00, C03C 27/06, C03C 27/12, E06B 3/663

(54) **GLASS ARTICLE**

(30) Priority: 13.01.2022 JP 2022004023
(71) Applicant: NIPPON SHEET GLASS COMPANY, LIMITED, Tokyo 108-6321 (JP)
(72) Inventor: KAWAZU, Mitsuhiro, Tokyo 108-6321 (JP); WATANABE, Yoko, Tokyo 108-6321 (JP); IIDA, Genichiro, Tokyo 108-6321 (JP); YABUTA, Takeshi, Tokyo 108-6321 (JP)
(74) Representative: Hope, Adam John
(86) International application number: PCT/JP2022/045327
(87) International publication number: WO 2023/135997

(57) **Abstract**

A glass article according to the present invention includes a glass substrate and a water repellent film provided on the glass substrate and containing an inorganic water repellent component, in which the inorganic water repellent component contains a lanthanoid oxide.

## Description

### Technical Field

The present invention relates to a glass article, an automobile window glass, and a building window glass.

### Background Art

A water repellent film may be formed on a surface of a glass substrate or another substrate. The water repellent film is generally formed by applying a water repellent agent containing a water repellent organic substance, specifically, a fluorine-containing compound or a silicone-based compound. It has also been proposed that a part of the water repellent film is formed of an inorganic compound. For example, PTL 1 discloses a water repellent article including a substrate and a water repellent film, in which the water repellent film includes a metal oxide particle layer and an overcoat layer in this order from the substrate side. The metal oxide particle layer has minute irregularities on the surface thereof, thereby improving abrasion resistance and the like of water repellency imparted by the overcoat layer. The oxide constituting the metal oxide particles is only SiO₂ in Examples, but CeO and other oxides are also exemplified. The overcoat layer used in Examples is a hydrolysis polycondensation product of a hydrolyzable organic silicon compound.

Studies have also been conducted on a technique for imparting water repellency independent of an organic substance. For example, PTL 2 discloses a technique of sintering an oxide ceramic by firing the oxide ceramic at 1600°C for 5 hours in an atmosphere having a low organic substance concentration and a low moisture concentration to impart water repellency. Examples of the oxide constituting the oxide ceramic include oxides of rare earths such as CeO₂.

### Citation List

### Patent Literatures

PTL 1: Japanese Patent Laid-open Publication No. 2015-116731
PTL 2: Japanese Patent Laid-open Publication No. 2015-140277

### Summary of Invention

### Technical Problem

The glass substrate may be subjected to a treatment involving heating, which may reach a high temperature of several hundred degrees depending on the contents of the treatment. The water repellency imparted by the organic substance completely disappears at such a high temperature. On the other hand, the water repellency according to PTL 2 can be expected to be stably exhibited even at a high temperature. However, the technique according to PTL 2 imparts water repellency to an oxide ceramic itself which is a substrate having high heat resistance, and sintering at a high temperature is essential. For this reason, application to a glass substrate is difficult. When the glass substrate is heated under the conditions of 1600°C for 5 hours disclosed in PTL 2, the glass substrate is usually softened at least to such an extent that the shape as a substrate cannot be maintained, and in some cases, completely melted.

In view of the above, an object of the present invention is to provide a glass substrate imparted with water repellency that does not disappear even when subjected to a thermal treatment.

### Solution to Problem

Item 1. A glass article including:
a glass substrate; and
a water repellent film provided on the glass substrate and containing an inorganic water repellent component,
in which the inorganic water repellent component contains a lanthanoid oxide.

Item 2. The glass article according to item 1, in which the glass substrate is formed in a curved surface.

Item 3. The glass article according to item 1 or 2, in which the glass substrate is subjected to air-quenching strengthening or chemical strengthening.

Item 4. The glass article according to any one of items 1 to 3, in which cerium oxide fine particles are not exposed on a surface of the water repellent film.

Item 5. The glass article according to any one of items 1 to 4, in which the lanthanoid oxide contains cerium oxide.

Item 6. The glass article according to any one of items 1 to 5, in which a crack does not occur on the surface of the water repellent film.

Item 7. The glass article according to any one of items 1 to 6, in which a film thickness of the water repellent film is 30 µm or less.

Item 8. An automobile window glass formed of the glass article according to any one of items 1 to 7, the water repellent film being disposed on a vehicle exterior side.

Item 9. An automobile window glass on which an information acquisition device configured to acquire information by emitting and/or receiving light is capable of being disposed, the automobile window glass including:
an outer glass plate formed of the glass article according to any one of items 1 to 7 and disposed such that the water repellent film faces a vehicle exterior side,
an inner glass; and
an interlayer film bonding the outer glass plate and the inner glass plate,
in which the automobile window glass has an information acquisition region through which the light passes, and the water repellent film is disposed in the information acquisition region.

Item 10. The automobile window glass according to item 8 or 9, in which the water repellent film contains hollow fine particles.

Item 11. The automobile window glass according to any one of items 8 to 10, wherein the water repellent film contains an organic polymer.

Item 12. A building window glass formed of the glass article according to any one of items 1 to 7, the water repellent film being disposed toward an outside of a building.

Item 13. A building window glass including:
a first glass plate formed of the glass article according to any one of items 1 to 7;
a second glass plate facing the first glass plate with a void layer interposed therebetween; and
a seal portion joining outer peripheral edges of the first glass plate and the second glass plate to each other so as to seal the void layer,
in which the seal portion contains solder.

### Advantageous Effects of Invention

According to the present invention, there is provided a glass substrate imparted with water repellency that does not disappear even when subjected to a thermal treatment.

### Brief Description of Drawings

Fig. 1 is a cross-sectional view of a glass article according to an embodiment of the present invention.
Fig. 2 is a photograph of an example of the glass article of the present invention observed using a SEM.
Fig. 3 is a cross-sectional view of an example of a laminated glass to which the glass article of the present invention is applied.
Fig. 4 is a cross-sectional view of an example of a double glazing glass to which the glass article according to the present invention is applied.
Fig. 5 is a photograph of Example of the glass article of the present invention observed using a SEM.
Fig. 6 shows a result of XRD of Example of the glass article of the present invention.
Fig. 7 is a graph showing a relationship between a thickness of a water repellent film of the glass article of the present invention and a visible light transmittance.
Fig. 8 is a graph showing a relationship between the thickness of the water repellent film of the glass article of the present invention and a color difference ΔE.
Fig. 9 is a graph showing a relationship between the thickness of the water repellent film of the glass article of the present invention and a transmittance. Description of Embodiments

The following description of embodiments of the present invention is not intended to limit the present invention to specific embodiments. In the present specification, the term "main component" means a component whose content rate is 50% or more, particularly 60% or more, on a mass basis. The phrase "substantially free" means that the content rate of a component is less than 1% or even less than 0.1% on a mass basis. The phrase "substantially flat" means that other than fine particles and projecting portions in a fine particle shape on a surface, no irregularities having a height or depth of 500 nm or more are observed using a SEM. The term "ordinary temperature" is used as a term that means a temperature in a range of 5 to 35°C, particularly 10 to 30°C.

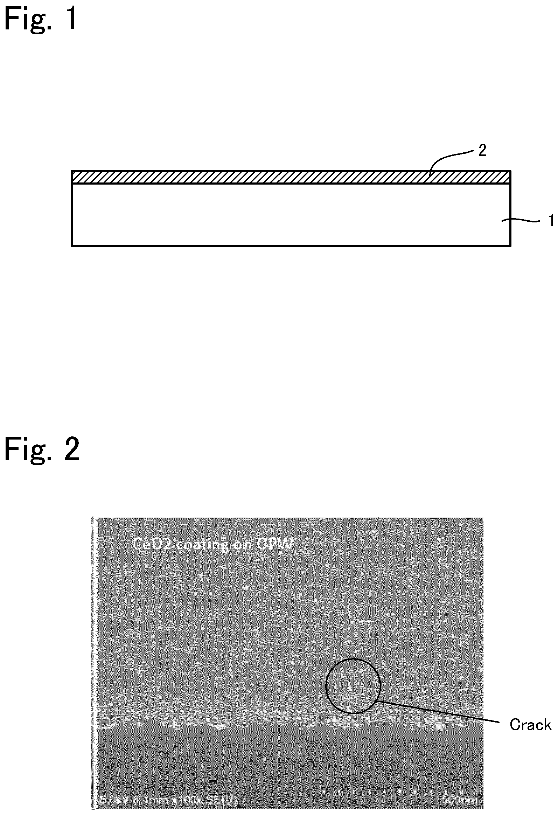

Fig. 1 illustrates a glass article according to the present embodiment. As illustrated in Fig. 1, this glass article includes a glass substrate 1 and a water repellent film 2 formed on the glass substrate 1. An inorganic water repellent component contained in the water repellent film 2 contains a lanthanoid oxide. Hereinafter, each configuration will be described in detail.

The lanthanoid oxide can function as a water repellent material unlike aluminum oxide, silicon oxide, and the like. According to the study of the present inventors, the water repellency by the lanthanoid oxide may reach 75° or more, 80° or more, or even 85° or more as expressed in terms of the contact angle of water. The contact angle of this degree has been realized by surface treatment using a water repellent agent which is an organic substance. The water repellent agent which is an organic substance is usually decomposed in the process of heating to about 300°C, but the lanthanoid oxide stably exists even when heated to a higher temperature.

In the present embodiment, for example, the contact angle of water after the glass article attached with the water repellent film is subjected to a thermal treatment at 760°C for 4 minutes may be 75° or more, 80° or more, or even 85° or more. However, in the present embodiment, since the contact angle of water on the surface of the water repellent film 2 may temporarily decrease immediately after the thermal treatment, the contact angle may be measured after a period from the thermal treatment. It takes several tens of days in some cases to recover the contact angle. Therefore, the contact angle may be measured, for example, after the glass article is subjected to the thermal treatment at 760°C for 4 minutes and further stored in the atmosphere at ordinary temperature for 40 days.

### <1. Glass substrate>

There is no limitation on the type of glass constituting the glass substrate 1. The glass substrate 1 may be formed of various types of glass called soda-lime glass, borosilicate glass, aluminosilicate glass, alkali-free glass, quartz glass, or the like. The glass substrate 1 may contain SiO₂ as a main component. The size and the shape of the glass substrate 1 are not particularly limited, either. The glass substrate 1 may be a glass plate, a glass container, a glass lid, a glass tube, a glass bulb, a glass lens, a glass fiber, a glass filler, or any other molded body. The glass container is, for example, a glass vial, a glass ampoule, or a glass bottle, and may have other shapes called a tray, a Petri dish, or the like. The shape of the glass lid is not limited as long as the glass lid functions as a lid, and the glass lid may have a shape, for example, allowing the glass lid to be used as a lid of a cooking device. The glass fiber may be a long fiber or a short fiber. The glass filler may have, for example, a flaky shape.

When the glass substrate 1 is formed of a glass plate, the glass substrate 1 may be a flat plate, or may have a curved shape achieved by a bending treatment. The glass plate may be, for example, subjected to a reinforcement treatment. As the reinforcement treatment, air-quenching strengthening in which the glass plate is rapidly cooled after heating to generate a compressive stress layer on a surface of the glass plate and chemical strengthening in which a compressive stress layer is formed on a surface of the glass plate by ion exchange of alkali metal ions are known.

The thickness of the glass plate is not particularly limited, and can be, for example, in a range of 0.5 to 12 mm.

The glass substrate 1 may be treated so as to be suitable for use as a window glass for buildings, automobiles, and the like. For example, the glass plate constituting the glass substrate 1 may be integrated with another glass plate by a lamination processing and/or a double-glazing processing as described later. Various coating films may be formed on the surface of the glass plate to impart or control properties other than the water repellency. Examples of the coating films include a conductive film, a reflection-reducing film, and a colored film. The colored film is, for example, a ceramic coating for imparting a black frame to the peripheral edge of the glass plate.

### <2. Water repellent film>

The water repellent film 2 contains a lanthanoid oxide, and may contain a lanthanoid oxide as a main component. The water repellent film 2 may have a surface on which the lanthanoid oxide is exposed. The water repellent film 2 has a crystallized structure of the lanthanoid oxide by thermal processing described later.

Examples of the lanthanoid oxide include cerium oxide, praseodymium oxide (for example, Pr₆O₁₁), neodymium oxide (for example, Nd₂O₃), samarium oxide (for example, Sm₂O₃), europium oxide (for example, Eu₂O₃), gadolinium oxide (for example, Gd₂O₃), terbium oxide (for example, Tb₄O₇), dysprosium oxide(Dy₂O)₃, holmium oxide (for example, Ho₂O₃), erbium oxide (for example, Er₂O₃), thulium oxide (for example, Tm₂O₃), ytterbium oxide (for example, Yb₂O₃), and lutetium oxide (for example, Lu₂O₃).

Among them, cerium oxide can be suitably used. For example, the water repellent film 2 may contain cerium oxide as a main component. The cerium oxide preferably includes Ceo, that is, an oxide of tetravalent cerium. CeO₂ is a desirable component from the viewpoint of enhancing water repellency as compared with Ce₂O₃, that is, an oxide of trivalent cerium. However, the water repellent film may contain Ce₂O₃ as the cerium oxide. For example, when a compound containing trivalent cerium is used as a supply source of cerium oxide and a part thereof is oxidized to tetravalent cerium, the rest of the trivalent cerium is contained in the water repellent film as Ce₂O₃ together with CeO₂.

A conventional water repellent film on a substrate such as glass usually has a multi-layer configuration including a metal oxide layer serving as an underlayer and an overcoat layer of an organic compound (see PTL 1). The overcoat layer is often formed of a hydrolysis polycondensation product of a hydrolyzable organic silicon compound in order to be firmly bonded to the metal oxide layer. The hydrolyzable organic silicon compound is an organic compound, typically a fluoroalkyl group-containing compound, suitable for improvement of the water repellency. On the other hand, in the present embodiment, the water repellent film 2 may be substantially free of a hydrolysis polycondensation product of the hydrolyzable organic silicon compound. The water repellent film 2 may be substantially free of a fluoroalkyl group-containing compound.

The water repellent film 2 may be a single-layer film or may be a multi-layer film formed of a plurality of layers, but the single-layer film is advantageous in reducing mass production cost. The water repellent film 2 of the present embodiment can maintain water repellency even in the case of a single-layer film. In the case of a multi-layer film, the water repellent film 2 desirably includes a layer containing a lanthanoid oxide as an uppermost layer of the multi-layer film.

The water repellent film 2 of the present embodiment preferably has a contact angle of water of 75° or more, even 80 or more, 85° or more, or in some cases, 90° or more. The upper limit of the contact angle of water is not particularly limited, but is, for example, less than 110° or even less than 100°. The contact angle of water can be measured by adding 4 ml of pure water dropwise onto the surface of the water repellent film 2.

The water repellent film 2 of the present embodiment does not completely lose its water repellency even when heated to a high temperature, for example, 500°C or even 760°C. The water repellent film 2 of the present embodiment can achieve, for example, a contact angle of water of 75° or more, even 80° or more, 85° or more, or in some cases, 90° or more even after exposure of the glass article to the thermal treatment at 760°C for 4 minutes.

Although the details of the reason are unknown, the water repellency of the water repellent film 2 of the present embodiment may temporarily decrease after being heated at a high temperature. Immediately after film formation, a measured value may not stable and may be a low value. However, also in these cases, the contact angle of water gradually increases only by exposing the water repellent film to the atmosphere and storing the water repellent film at ordinary temperature, and the contact angle becomes more stable and exhibits the above-described degree. According to the study of the present inventors, a period of time required for recovery and stabilization of the contact angle is about 30 to 40 days. Therefore, the contact angle after the thermal treatment at a high temperature is desirably measured after storage in the atmosphere at ordinary temperature for a predetermined period of time.

The water repellent film 2 may contain an organic component. The organic component may be an organic compound, or may be an organic group bonded to an oxide or the like constituting a film. The content rate of the organic component in the water repellent film is not particularly limited, but may be 0.01% or more or even 0.1% or more on a mass basis, and may be 10% or less or even 1% or less. The water repellent film 2 not subjected to a thermal treatment at a high temperature may contain a relatively high content rate of the organic component. However, the water repellent film 2 may be substantially free of an organic component.

The organic group contained in the water repellent film 2 may include an epoxy group. That is, an organic polymer having an epoxy group can be contained. The epoxy group is a preferred functional group suitable for use in a production example of the water repellent film 2 described later. As described later, the epoxy group is consumed by a reaction with another component, specifically, an acid, but an excessively added epoxy group may remain in the water repellent film. The epoxy group remaining in the water repellent film 2 functions as a crosslinking agent particularly in the thermal treatment and can affect the structure of the film.

Examples of the organic polymer contained in the water repellent film 2 include polyethylene glycol, a polyether-based resin, a polyurethane resin, a starch-based resin, a cellulose-based resin, an acryl-based resin, polyester polyol, hydroxyalkyl cellulose, polyvinyl alcohol, polyvinyl pyrrolidone, polycaprolactone polyol, a polyvinyl acetal resin, polyvinyl acetate, and a polyalkylene glycol-based resin.

The water repellent film 2 may contain an inorganic compound other than the lanthanoid oxide. Examples of the oxide other than the lanthanoid oxide include oxides of rare earths. The inorganic compound may be, for example, a nitride, a carbide, or the like other than the oxide.

The film thickness of the water repellent film 2 is, for example, preferably 5 to 100 nm, further preferably 50 nm or more, and is more preferably 30 nm or less, and particularly preferably 20 nm or less. When the film thickness of the water repellent film 2 increases, a haze ratio may increase.

The water repellent film 2 may have a dense structure or may have pores therein. The porosity of the water repellent film 2 may be, for example, 20% or more, 25% or more, 30% or more, or in some cases, 40% or more, and may be 85% or less, 70% or less, 60% or less, or in some cases, 50% or less. The water repellent film having an appropriate porosity may have excellent optical properties. Specifically, control of the porosity can achieve elimination of an interference color that can be caused by the water repellent film 2, improvement of the visible light transmittance and reflectance, and the like.

The porosity can be measured, for example, as follows. Optical parameters of the film were determined by spectral analysis of reflected light using an ellipsometer (manufactured by Mizojiri Optical Co., Ltd., DVA-FL type). In this case, the laminate structure of a glass plate attached with a water repellent film is set as the glass plate (refractive index: 1.52)/the water repellent film (refractive index: 2.2; when the porosity is 0), the refractive index and the film thickness of the water repellent film are calculated by fitting, and the porosity thereof can be calculated.

In order to form the pores, for example, hollow fine particles can also be mixed. Such hollow fine particles can be formed of, for example, silica fine particles. That is, hollow silica fine particles can be used. The diameter of such hollow fine particles can be, for example, 50 to 60 nm. Alternatively, in place of the silica fine particles, fine particles containing MgF₂ fine particles as a main component can be contained.

On the surface of the water repellent film 2, minute irregularities represented by the following indices may be formed. An arithmetic average roughness Ra may be 1 nm or more, 2 nm or more, even 3 nm or more, or in some cases, 10 nm or more, and may be 50 nm or less, 40 nm or less, even 30 nm or less, or in some cases, 25 nm or less. A ten-point average roughness RzJIS may be 20 nm or more, even 50 nm or more, 100 nm or more, or even 200 nm or more, and may be 500 nm or less, 400 nm or less, or even 300 nm or less. Here, Ra is an arithmetic average roughness defined in Japanese Industrial Standard (JIS) B 0601:2013, and RzJIS is a ten-point average roughness defined in JIS B 0601:2001. The water repellent film 2 having appropriate minute irregularities acts on the surface tension of water droplets to which the minute irregularities adhere, for example, and thus can have further improved water repellency.

The surface property can be measured, for example, as follows. A surface height profile is acquired for a field of view of 5 um square using an atomic force microscope (manufactured by former SII NANOTECHNOLOGY INC., SPA-400 type), and the arithmetic average roughness Ra of IS B 0601:2013 and the ten-point average roughness RzJIS of JIS B 0601:2001 can be calculated based on the profile.

The water repellent film 2 may have a plurality of fine particles on its surface. The fine particles 2 may be lanthanoid oxide fine particles. In other words, a part of the lanthanoid oxide contained in the water repellent film 2 may be contained in the form of fine particles exposed on the surface of the water repellent film 2 as fine particles. The surface of the water repellent film 2 may be substantially flat. As described above, whether or not the surface is substantially flat is determined based on the flatness of the surface excluding the fine particles, that is, by excluding the irregularities provided by the fine particles. The particle diameter of the lanthanoid oxide fine particles may be in a range of 100 nm to 1.5 µm or even 250 nm to 1 µm. The particle diameter of the fine particles can be measured by SEM observation. The fine particles having the above particle diameter may be present on the surface of the water repellent film 2 at a density range of 1 to 100 particles or even 2 to 20 particles in a 5 µm square of the film surface. The presence of the fine particles can contribute to improvement of the water repellency through development of the minute irregularities.

The crystallite size of the lanthanoid oxide fine particles (for example, cerium oxide fine particles) contained in the water repellent film 2 is not particularly limited, but may be, for example, in a range of 1 to 100 nm or even 2 to 20 nm.

When the fine particles are exposed on the surface of the water repellent film 2, the haze ratio may decrease. Therefore, it is preferable that the lanthanoid oxide fine particles hardly exist on the surface of the water repellent film 2 and the surface is flat.

When the thickness of the water repellent film 2 increases, cracks may occur in the water repellent film 2. When a large crack occurs or the number of cracks increases, the water repellent film 2 may be peeled off from the glass substrate 1. There is also a possibility that the haze ratio increases due to cracks. There is also a possibility that moisture infiltrates from the cracks and the glass substrate 1 deteriorates. From the above viewpoint, it is preferable that the water repellent film 2 has no crack. Examples of cracks formed on the water repellent film 2 include cracks as shown in Fig. 2.

The water repellent film 2 may be formed directly on the glass substrate 1, or the water repellent film 2 may be formed after an underlayer is formed. As the underlayer, for example, a SiO₂ film can be formed.

### <3. Properties>

The water repellency that can be provided by the glass article of the present embodiment is as described above. In addition to this, the glass article of the present embodiment can have, for example, the following optical properties. The visible light transmittance may be 70% or more, 80% or more, or even 85% or more. The upper limit of the visible light transmittance is not particularly limited, but is, for example, 95%. A visible light reflectance may be 20% or less, 15% or less, 10% or less, or even 8% or less. The lower limit of the visible light reflectance is not particularly limited, but is, for example, 2%. Here, the visible light reflectance refers to a visible light reflectance at the surface on which the water repellent film 2 is formed, in other words, the visible light reflectance refers to a reflectance of visible light coming from the outside of the glass article through the water repellent film 2 and reaching to the glass substrate 1. The haze ratio is, for example, 20% or less, preferably 10% or less, even 5% or less, and particularly 4% or less.

The preferred ranges of the visible light transmittance, the visible light reflectance, and the haze ratio are as follows. More preferred ranges thereof are shown in the parentheses.
Visible light transmittance: 80 to 95% (85 to 95%)
Haze ratio: 5% or less (4% or less)
Visible light reflectance of the surface of the glass substrate 1 on which the water repellent film 2 is formed: 2 to 20% (2 to 8%)

### <4. Production method>

Next, a method for producing the glass article of the present embodiment will be described. However, the glass article of the present embodiment may be produced by a method other than the following production method.

The method for producing the glass article of the present embodiment includes a step of applying a coating liquid containing a lanthanoid oxide as a solid content onto the glass substrate 1 to form a coating film on the glass substrate 1, and a step of drying the coating film. The lanthanoid oxide includes those described above. The term "lanthanoid oxide" as a solid content is not necessarily present as a complete oxide as long as it is a component capable of supplying the lanthanoid oxide to the water repellent film 2. For example, when the lanthanoid oxide is cerium oxide, a cerium oxyhydroxide and a cerium hydroxide capable of supplying cerium oxide after dehydration condensation are also included.

This production method may further include a step of preparing a coating liquid. The coating liquid may contain a polar solvent, particularly a lower alcohol having 5 or less carbon atoms as a solvent. The lower alcohol may be methanol and/or ethanol. When the lanthanoid oxide contained in the water repellent film 2 is cerium oxide, the step of preparing a coating liquid may include hydrolyzing a cerium compound containing trivalent cerium. The hydrolyzable cerium compound is preferably a compound soluble in the polar solvent, and specifically, may be selected from water-soluble cerium compounds. The cerium compound may be, for example, at least one selected from the group consisting of a halogenated cerium and cerium nitrate. The halogenated cerium is, for example, cerium(III) chloride or cerium(III) bromide. The cerium compound is preferably a compound of trivalent cerium, as described above as examples including cerium(III) nitrate. However, the cerium compound is not limited thereto, and may include tetravalent cerium.

In a common sol-gel method, an acid or an alkali is added to a coating liquid in order to promote hydrolysis of a metal compound. In the production method of the present embodiment, an acid or an alkali may be added. However, a more preferred additive is an organic compound functioning as an acid scavenger, and is specifically an epoxy group-containing organic compound, particularly a water-soluble epoxide. The water-soluble epoxide is an epoxy group-containing compound having a solubility of 1 g/100 ml or more in water at 20°C. The water-soluble epoxide may be a monofunctional epoxide or a polyfunctional epoxide. The monofunctional water-soluble epoxide may be, for example, glycidyl ether of a lauryl alcohol EO adduct, glycidyl ether of a phenol EO adduct, or the like in addition to an epoxy group-containing alkane such as propylene oxide (1,2-epoxypropane) or 1.2-epoxybutane. The polyfunctional water-soluble epoxide is, for example, glycerol polyglycidyl ether, polyglycerol diglycidyl ether, or sorbitol polyglycidyl ether.

As described above, in the production method of the present embodiment, the cerium compound is preferably hydrolyzed in the presence of a water-soluble epoxide. In a case where the lanthanoid oxide contained in the water repellent film 2 is cerium oxide, when the cerium compound is hydrolyzed in the presence of a water-soluble epoxide, an acid generated by hydrolysis of the cerium compound is consumed, and the hydrolysis reaction is promoted. In a coating liquid to which the water-soluble epoxide is excessively added, tetravalent cerium is more likely to be yielded from trivalent cerium. This phenomenon is thought to be due to improvement of the stability of tetravalent cerium in a range at a high pH.

The prepared coating liquid is applied onto the glass substrate 1. The coating liquid is applied, for example, by a known method such as spin coating, bar coating, spray coating, nozzle flow coating, or roll coating.

The production method of the present embodiment may further include a step of subjecting the coating film to at least one treatment selected from washing and drying. The coating film formed by the application and still in a wet state includes, together with the cerium oxide, the organic compound, for example, the water-soluble epoxide and a product resulting from a ring-opening reaction thereof, contained in the coating liquid. At least a part of the organic compound in the coating film in a wet state is removed from the coating film by a treatment which is washing and/or drying, particularly by washing. As a solvent used for washing, an organic solvent, particularly, a polar organic solvent having 5 or less carbon atoms is suitable. One preferred example of the washing is performed using a lower alcohol and a ketone sequentially. The lower alcohol is, as described above, an alcohol having 5 or less carbon atoms. The ketone is preferably a ketone having 7 or less, 5 or less, or even 3 or less carbon atoms. By the removal of the organic compound, pores are formed in the water repellent film 2 after drying, and minute irregularities may be formed on the surface thereof. The porosity and the sizes of the minute irregularities can be controlled by the amount of the organic compound added, and others. The production method described above as an example is particularly suitable for forming a water repellent film having a desired porosity and desired minute irregularities.

The above-described oxidation of trivalent cerium to tetravalent cerium requires time in some cases. Therefore, the production method of the present embodiment may further include a step of holding at least one selected from the coating liquid and the coating film in a wet state just for a predetermined period of time. This step can be performed, for example, by holding at least one selected from the prepared coating liquid and the coating film in a wet state at a temperature of 5 to 80°C for 0.5 to 48 hours. This step allows what is called "aging" of the coating liquid or the coating film to take place, increasing the rate of tetravalent cerium. A preferred aging target is the coating liquid. For example, for the coating liquid, a color attributed to tetravalent cerium starts to be observed as conversion to tetravalent cerium progresses. The coating liquid containing only trivalent cerium is colorless if not containing another material that causes coloring. Typically, the coating liquid can be colored a brownish color first and then a yellowish color as more tetravalent cerium is generated, and in order to generate a sufficient amount of tetravalent cerium during the period of holding, the pH of the coating liquid is desirably maintained so as not to be too low. For example, the amount of the water-soluble epoxide, which acts as an acid scavenger, added may be appropriately adjusted to control the pH.

The process of generation of tetravalent cerium can be monitored in absorption spectra from an ultraviolet region to a visible region. For example, an absorption edge of the coating liquid in the ultraviolet region shifts to the long wavelength region side as more tetravalent cerium is generated. When the aging continues until this absorption edge shifts to be in a region of, for example, 350 nm or more, particularly 360 nm or more, a sufficient amount of tetravalent cerium to form the water repellent film is generated.

The preferred amount of the water-soluble epoxide added depends on the type of the water-soluble epoxide, and the like. When the water-soluble epoxide is propylene oxide, a mixing ratio of cerium(III) included in the cerium compound and propylene oxide may be in a range of 1 : 10 to 1 : 90, 1 : 15 to 1 : 80, or even 1 : 20 to 1 : 70, particularly 1 : 25 to 1 : 50, as expressed in terms of the molar ratio.

The epoxy group-containing organic compound such as the water-soluble epoxide may be further supplied after the hydrolysis of the cerium compound. The supply of the epoxy group-containing organic compound to the film may also achieve washing of the film. The supply of the epoxy group-containing organic compound after the hydrolysis can contribute to early stabilization of the contact angle of water after film formation. The supply of the epoxy group-containing organic compound can also contribute to improvement of the contact angle of water after the thermal treatment.

The production method of the present embodiment may further include a step of subjecting the glass substrate 1 to a treatment involving heating after the formation of the water repellent film 2 on the glass substrate 1. The treatment involving heating is at least one selected from the group consisting of the above examples, and is particularly a heat bending treatment and/or an air-quenching strengthening treatment. It should be noted that the glass substrate 1 of the present embodiment can also be used without there treatments.

The glass article attached with the water repellent film of the present embodiment is not limited to those produced by the method involving hydrolysis of the cerium compound exemplified above. The glass article attached with the water repellent film of the present embodiment can also be produced, for example, by a reduced-pressure film formation method typified by a sputtering method.

### <5. Use application>

The glass article according to the present embodiment can be used as, for example, a window glass for an automobile or a window glass for a building.

### <5-1. Automobile window glass>

When the glass article according to the present embodiment is used as an automobile window glass, the glass article can be used as a single-plate window glass or a window glass that is a laminated glass. In the case of a single plate, the water repellent film 2 can be used as a window glass facing the outside of a vehicle.

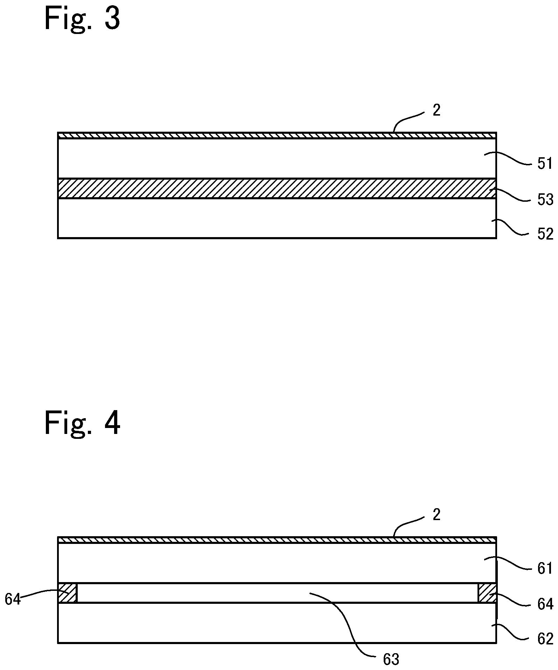

As illustrated in Fig. 3, the laminated glass includes an outer glass plate 51, an inner glass plate 52, and an interlayer film 53 bonding these glass plates. The glass article of the present embodiment can be used as the outer glass plate. At this time, the water repellent film 2 can be disposed so as to face the outside of the vehicle.

The thickness of the laminated glass according to the present embodiment is not particularly limited, but from the viewpoint of weight reduction, the total thickness of the outer glass plate 1 and the inner glass plate 2 is preferably 2.4 to 4.6 mm, further preferably 2.6 to 3.4 mm, and particularly preferably 2.7 to 3.2 mm. As described above, since it is necessary to reduce the total thickness of the outer glass plate 1 and the inner glass plate 2 in order to reduce the weight, the thickness of each glass plate is not particularly limited, but for example, the thicknesses of the outer glass plate 1 and the inner glass plate 2 can be determined as follows.

The outer glass plate 51 is mainly required to have durability and impact resistance against external obstacles, and for example, when this laminated glass is used as a windshield of an automobile, the outer glass plate 51 is required to have impact resistance against a flying object such as a pebble. On the other hand, as the thickness increases, the weight increases, which is not preferable. From this viewpoint, the thickness of the outer glass plate 51 is preferably 1.0 to 3.0 mm and further preferably 1.6 to 2.3 mm.

The thickness of the inner glass plate 52 can be made equal to that of the outer glass plate 51, but for example, the thickness of the inner glass plate 52 can be made smaller than that of the outer glass plate 51 in order to reduce the weight of the laminated glass. Specifically, in consideration of the strength of glass, the thickness is preferably 0.6 to 2.0 mm, further preferably 0.8 to 1.8 mm, and particularly preferably 0.8 to 1.6 mm. Furthermore, the thickness is preferably 0.8 to 1.3 mm.

The interlayer film 53 is not particularly limited as long as it includes one that is bonded to each of the glass plates 51 and 52 by fusion, but can be formed of, for example, a polyvinyl butyral resin (PVB), an ethylene vinyl acetate resin (EVA), or the like. In general, the hardness of the polyvinyl acetal resin can be controlled by (a) a polymerization degree of polyvinyl alcohol as a starting material, (b) an acetalization degree, (c) the type of a plasticizer, (d) an addition ratio of a plasticizer, and the like.

The thickness of the interlayer film 53 is not particularly limited, but is, for example, preferably 0.05 to 2.0 mm and further preferably 0.1 to 1.0 mm.

### <5-2. Building window glass>

When the glass article according to the present embodiment is used as a building window glass, the glass article can be used as a single-plate window glass or a window glass that is a double glazing glass. In the case of a single plate, the water repellent film 2 can be used as a window glass facing the outside of a building.

As illustrated in Fig. 4, the double glazing glass includes an outer glass plate (first glass plate) 61, an inner glass plate (second glass plate) 62, a void layer 63 formed between these glass plates 61 and 62, and a sealing material 64. The sealing material 64 fixes the outer peripheral edges of both the glass plates 61 and 62 to seal the void layer 63. The glass article of the present embodiment can be used as the outer glass plate 61. At this time, the water repellent film 2 can be disposed so as to face the outside of the building. The water repellent film 2 can also be formed on the indoor-side surface of the inner glass plate 62.

The thickness of each of the glass plates 61 and 62 is not particularly limited, but is, for example, preferably 2 to 15 mm and further preferably 2.5 to 8 mm.

The thickness of the void layer 63 is not particularly limited, but is, for example, preferably 4 to 16 mm and further preferably 6 to 16 mm. The void layer 63 can be filled with an inert gas such as argon or krypton in addition to dry air.

The sealing material 64 is not particularly limited, but a known sealing material such as silicone sealant or polysulfide sealant can be used. The sealing material 64 may contain solder.

### <6. Features>

Many of the treatments of the glass substrate 1 such as a glass plate involve heating of the glass plate. For example, the bending treatment of the glass plate includes a step of softening the glass plate by heating. In a lamination processing treatment and a double-glazing processing treatment as well as in the reinforcement treatment, glass plates may be heated to a high temperature depending on the type of a resin film sandwiched between the glass plates or the type of a sealant used to seal the space between glass sheets. The water repellent film exhibiting water repellency by an organic substance significantly decreases the water repellency through heating in such treatments. Therefore, the water repellent film needs to be formed after a treatment involving heating of the glass plate. Such a restriction on the processes may inhibit the efficiency of mass production. For example, uniformly applying a coating liquid on a curved surface is much more difficult than uniformly applying a coating liquid onto a surface of a flat plate. A step of applying a coating liquid onto a flat glass strip before cutting the flat glass strip processing each of the resulting pieces to have a curved surface can be performed much more efficiently.

Such a water repellency decrease caused by a treatment involving heating occurs not only in the glass plate but also in the glass substrate 1 in general. On the other hand, according to the present embodiment, the water repellency is exhibited independent of an organic substance, so that a decrease in water repellency caused by heating can be reduced. Therefore, in the method according to the present embodiment, it is possible to subject the glass substrate 1 to various treatments after the water repellent film 2 is formed and then the glass substrate 1 on which the water repellent film 2 has been formed is heated. In the case of the glass plate, the various treatments include, for example, at least one selected from the group consisting of a bending treatment involving heating (heat bending treatment), an air-quenching strengthening treatment, a chemical strengthening treatment, a lamination processing treatment, a double-glazing processing treatment, and a film formation treatment, and particularly a heat bending treatment and/or an air-quenching strengthening treatment. That is, in the present embodiment, the glass substrate 1 may be a glass plate subjected to at least one treatment selected from the group consisting of a heat bending treatment and an air-quenching strengthening treatment. The temperature applied to the above thermal treatment is usually, at most, about 760°C or lower.

Conventionally, a glass plate is subjected to a heat bending treatment and/or an air-quenching strengthening treatment after being cut into a predetermined shape, and then a coating liquid for forming a water repellent film is applied to a main surface of the glass plate. Therefore, a part of the coating liquid is attached to an edge face of the glass plate, and the water repellent film is also formed on at least a part of the edge face. On the other hand, according to the present embodiment, it is possible to form the water repellent film by applying the coating liquid onto a main surface of a flat-plate-shaped glass plate, and then to subject the glass plate to at least one treatment selected from the group consisting of a heat bending treatment and an air-quenching strengthening treatment. The glass plate provided by this embodiment may be a glass plate including the water repellent film 2 at least one main surface of the glass plate and not having the water repellent film 2 on an edge face of the glass plate. The water repellent film 2 which is locally thick may be formed at the edge face where the coating liquid is likely to be accumulated. Therefore, avoidance of the formation of the water repellent film 2 which is locally thick at the edge face is advantageous, for example, in ensuring a fine product appearance. In addition to such quality improvement, the glass plate also contributes to reduction in end product cost because a coating treatment can be continuously applied to the uncut glass plate having a large area.

### Examples

Hereinafter, the present invention will be described in more detail with reference to Examples, but the following Examples are not presented to limit the present invention to specific embodiments.

First, methods for measuring the above-described properties will be described.

### (Optical properties)

The visible light transmittance and the visible light reflectance were determined from a visible-ultraviolet absorption spectrum measured using a spectrophotometer (manufactured by Hitachi, Ltd., 330 type), and the haze ratio was measured using a haze meter (manufactured by Suga Test Instruments Co., Ltd., HZ-V3 type).

### (Contact angle of water)

The contact angle of water was measured using a contact angle measuring instrument (manufactured by Kyowa Interface Science Co., Ltd., DMS-401 type) by adding 4 mg of purified water dropwise to the surface of the water repellent film. However, the contact angle of water was measured after the water repellent film was formed and then left to stand in the atmosphere at ordinary temperature for 20 days. The contact angle of water after the thermal treatment was measured after the glass plate attached with the water film having undergone the thermal treatment was left to stand in the atmosphere at ordinary temperature for 40 days.

### (Thermal treatment)

The glass plate attached with the water repellent film was heated in an electric furnace set at 760°C for 4 minutes, taken out of the furnace, wrapped in ceramic wool, and then cooled to room temperature at a cooling rate at which heat cracking did not occur. The contact angle of water and the like were also measured after the thermal treatment.

### (Example 1)

With 67.19 g of industrial alcohol A-10 (manufactured by Futaba Chemical Co., Ltd.), 1.01 g of cerium(III) nitrate hexahydrate (manufactured by FUJIFELM Wako Pure Chemical Corporation), 16.80 g of acetylacetone (manufactured by FUJIFILM Wako Pure Chemical Corporation), and 15.0 g of propylene glycol (Tokyo Chemical Industry Co., Ltd.) were mixed to obtain 100 g of a coating liquid. That is, the coating liquid contained 0.40 wt% of cerium(III) nitrate hexahydrate, and then the coating liquid was stirred at room temperature overnight.

A highly-transmissive glass (manufactured by Nippon Sheet Glass Co., Ltd., Optiwhite (registered trademark) having a thickness of 3 mm) was cut into 10 cm square, and washed and dried to prepare a glass substrate. The aged coating liquid was applied to the glass substrate. The application was performed for the substrate rotating at a rotation speed of 1000 rpm using a spin coater (manufactured by Mikasa Co., Ltd., 1H-360S type), and the rotation was kept for 10 seconds after the application. The coating liquid was applied, dried at 250°C for 1 hour, and then fired at 760°C for 4 minutes to obtain a water repellent film. A glass article having a water repellent film with a thickness of 20 nm was obtained.

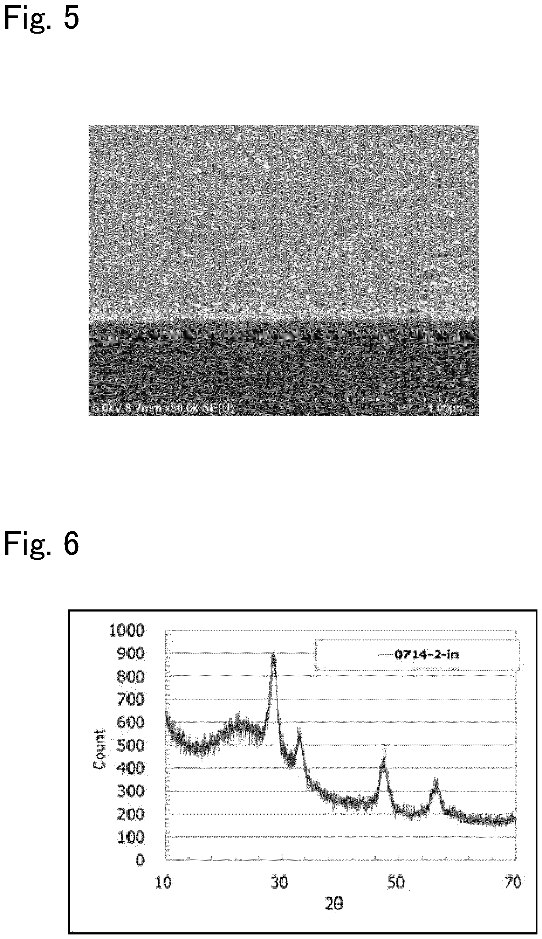

The surface property of the water repellent film was observed using a SEM to obtain a photograph shown in Fig. 5. As shown in the photograph, the cerium oxide fine particles are not exposed on the surface of the water repellent film of Example 1. The contact angle of the water repellent film was 76.0°.

### <1. Study of crystal structure>

The water repellent film was subjected to XRD measurement under the following conditions.
- Analyzer: X-ray diffractometer (Rigaku Corporation: SmartLab)
- Analysis conditions: in-plane X-ray diffraction method (parallel beam: ϕ-2θχ coupled scan)
- CuKα ray, tube voltage 45 kV, tube current 200 mA (9.0 kW)
- In-plane axis alignment was performed, and then measurement was performed with an incident angle ω of X-rays = 0.50°.
- 2θ range: 10 to 70°, sampling angle: 0.024°, scan speed: 0.5°/min, incident slit: 0.2 mm, light receiving slit 1: 20.0 mm, light receiving slit 2: 20.0 mm, incident parallel slit: In-plane_PSC_0.5 deg, longitudinal restriction slit: 10.0 mm

The results are as shown in Fig. 6. As shown in Fig. 6, the peak of the (111) plane is obtained relatively sharply. The contact angle was 76.0°. The water repellent film was characterized in that crystal growth by firing at 760°C was not observed, and the crystallite size was close to 32 Å before firing and 38 Å after firing. The peak values shown in the graph of Fig. 6 indicate that the crystal structure of CeO₂ is formed.

### <2. Study of film thickness of water repellent film>

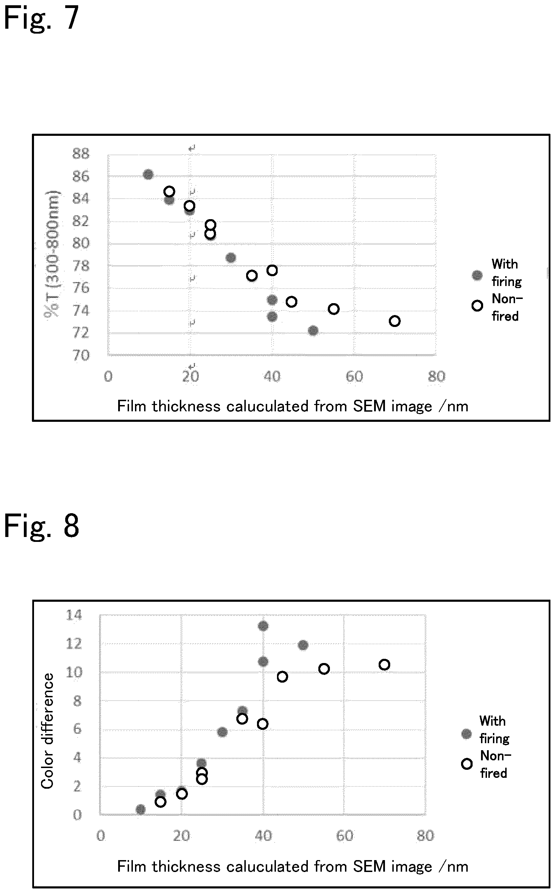

In the water repellent film having the composition of Example 1, changes in visible light transmittance and color difference ΔE were calculated by changing the film thickness of the water repellent film. Fig. 7 shows a relationship between the film thickness and the visible light transmittance (%T (300 to 800 nm)), and Fig. 8 shows a relationship between the film thickness and the color difference ΔE. As shown in Fig. 7, the visible light transmittance decreases as the film thickness increases. On the other hand, as shown in Fig. 8, the color difference ΔE increases as the film thickness increases. Therefore, from the viewpoint of the visible light transmittance and the color difference ΔE, the film thickness of the water repellent film is preferably small.

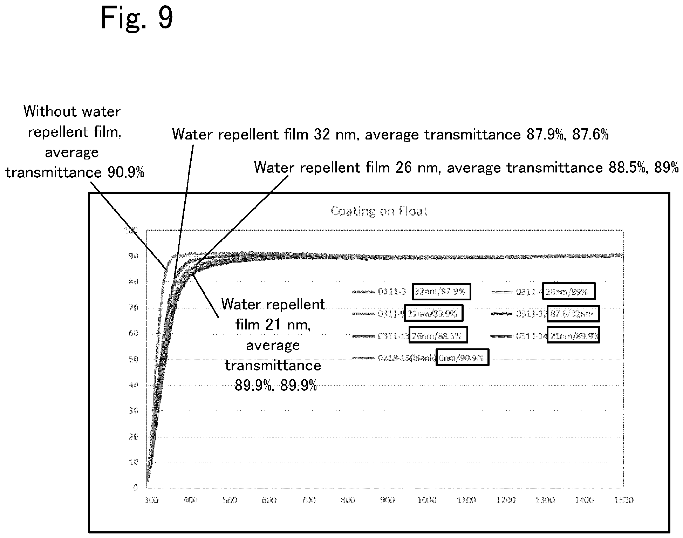

In the water repellent film having the composition of Example 1, the transmittance for each wavelength was measured by changing the film thickness of the water repellent film in a range of 21 to 32 nm. The transmittance of the pattern on which the water repellent film was not formed was also measured. The results are as shown in Fig. 9. As shown in Fig. 9, the transmittance of the glass plate on which the water repellent film is not formed has the highest transmittance, and the transmittance decreases as the film thickness of the water repellent film increases. In particular, when the film thickness of the water repellent film is 30 nm or less, the average transmittance of visible light having a wavelength of 380 to 780 nm was 2.5% or less that was lower than that of the glass plate on which the water repellent film was not formed.

### Reference Signs List

1 Glass substrate
2 Water repellent film

## Claims

1. A glass article comprising:
a glass substrate; and
a water repellent film provided on the glass substrate and containing an inorganic water repellent component,
wherein the inorganic water repellent component contains a lanthanoid oxide.

2. The glass article according to claim 1, wherein the glass substrate is formed in a curved surface.

3. The glass article according to claim 1 or 2, wherein the glass substrate is subjected to air-quenching strengthening or chemical strengthening.

4. The glass article according to any one of claims 1 to 3, wherein lanthanoid oxide fine particles are not exposed on a surface of the water repellent film.

5. The glass article according to any one of claims 1 to 4, wherein the lanthanoid oxide contains cerium oxide.

6. The glass article according to any one of claims 1 to 5, wherein a crack does not occur on the surface of the water repellent film.

7. The glass article according to any one of claims 1 to 6, wherein a film thickness of the water repellent film is 30 µm or less.

8. An automobile window glass formed of the glass article according to any one of claims 1 to 7, the water repellent film being disposed on a vehicle exterior side.

9. An automobile window glass on which an information acquisition device configured to acquire information by emitting and/or receiving light is capable of being disposed, the automobile window glass comprising:
an outer glass plate formed of the glass article according to any one of claims 1 to 7 and disposed such that the water repellent film faces a vehicle exterior side,
an inner glass; and
an interlayer film bonding the outer glass plate and the inner glass plate,
wherein the automobile window glass has an information acquisition region through which the light passes, and the water repellent film is disposed in the information acquisition region.

10. The automobile window glass according to claim 8 or 9, wherein the water repellent film contains hollow fine particles.

11. The automobile window glass according to any one of claims 8 to 10, wherein the water repellent film contains an organic polymer.

12. A building window glass formed of the glass article according to any one of claims 1 to 7, the water repellent film being disposed toward an outside of a building.

13. A building window glass comprising:
a first glass plate formed of the glass article according to any one of claims 1 to 7;
a second glass plate facing the first glass plate with a void layer interposed therebetween; and
a seal portion joining outer peripheral edges of the first glass plate and the second glass plate to each other so as to seal the void layer,
wherein the seal portion contains solder.
